(19) Europäisches Patentamt
European Patent Office
Office européen des brevets

(11) EP 4 492 496 B1

(12) EUROPEAN PATENT SPECIFICATION

(45) Date of publication and mention of the grant of the patent:
**15.10.2025 Bulletin 2025/42**

(21) Application number: **24186706.8**

(22) Date of filing: **05.07.2024**

(51) International Patent Classification (IPC):
***H01M 4/525** (2010.01)* ***H01M 10/0525** (2010.01)*
***H01M 10/0567** (2010.01)* ***H01M 10/42** (2006.01)*

(52) Cooperative Patent Classification (CPC):
**H01M 10/0567; H01M 4/525; H01M 10/0525; H01M 10/4235;** H01M 2300/0025; Y02E 60/10

# (54) RECHARGEABLE LITHIUM BATTERY

WIEDERAUFLADBARE LITHIUMBATTERIE

BATTERIE RECHARGEABLE AU LITHIUM

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **12.07.2023 KR 20230090556**

(43) Date of publication of application:
**15.01.2025 Bulletin 2025/03**

(73) Proprietor: **SAMSUNG SDI CO., LTD.**
**Giheung-gu**
**Yongin-si, Gyeonggi-do**
**17084 (KR)**

(72) Inventors:
- **Yang, Yeji**
  **17084 Yongin-si, Gyeonggi-do (KR)**
- **Choi, Hyunbong**
  **17084 Yongin-si, Gyeonggi-do (KR)**
- **Kim, Sundae**
  **17084 Yongin-si, Gyeonggi-do (KR)**
- **Park, Injun**
  **17084 Yongin-si, Gyeonggi-do (KR)**
- **Park, Sangwoo**
  **17084 Yongin-si, Gyeonggi-do (KR)**
- **Kim, Sohee**
  **17084 Yongin-si, Gyeonggi-do (KR)**
- **Park, Hongryeol**
  **17084 Yongin-si, Gyeonggi-do (KR)**
- **Kim, Sanghoon**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

(56) References cited:
**EP-A1- 4 142 005**
**US-A1- 2017 162 906**
**US-A1- 2021 020 990**
**US-A1- 2023 093 801**
**US-A1- 2023 098 836**
**US-A1- 2023 187 693**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 4 492 496 B1

## Description

### BACKGROUND OF THE INVENTION

#### 1. Field

A rechargeable lithium battery is disclosed.

#### 2. Description of the Related Art

Recently, with the rapid spread of electronic devices using batteries such as mobile phones, notebook computers, and electric vehicles, interest in rechargeable batteries having high energy density and high capacity is rapidly increasing. Accordingly, research and development for improving the performance of rechargeable lithium batteries is actively progressing.

A rechargeable lithium battery includes a positive electrode and a negative electrode including an active material capable of intercalating and deintercalating lithium ions, and an electrolyte solution, and electrical energy is produced by oxidation and reduction reactions when lithium ions are intercalated/deintercalated at the positive and negative electrodes. For example, EP 4 4142 005 A1 discloses a rechargeable lithium battery including a positive electrode including a positive active material; a negative electrode including a negative active material; and an electrolyte solution including a non-aqueous organic solvent, a lithium salt, and an additive, wherein the additive includes a dioxaphosphorane or a dioxaphospholane compound. US 2023/0187693 A1 relates to a nonaqueous electrolyte secondary battery includes a positive electrode, a negative electrode, and a nonaqueous electrolyte. The nonaqueous electrolyte includes an isocyanuric acid ester component having at least one unsaturated organic group with an unsaturated carbon-carbon bond.

For example, because the characteristics of a rechargeable lithium battery are determined by a complicated reaction between the positive electrode, electrolyte, negative electrode, and electrolyte, the use of a suitable or appropriate electrolyte is one of the variables for improving the performance of a rechargeable lithium battery.

### SUMMARY

The invention is defined by the appended claims. The description that follows is subjected to this limitation. Any disclosure lying outside the scope of said claims is only intended for illustrative as well as comparative purposes. Some embodiments of the present disclosure provide a rechargeable lithium battery that can improve charge/discharge characteristics when stored at high temperatures and cycle-life characteristics at room temperature and high temperature, while reducing gas generation at high temperatures.

A rechargeable lithium battery according to the invention includes a positive electrode including a positive electrode active material; a negative electrode including a negative electrode active material; an electrolyte solution for a rechargeable lithium battery including a non-aqueous organic solvent, a lithium salt, and an additive, wherein the additive includes a first compound represented by Chemical Formula 1 and a second compound represented by Chemical Formula 2, and the positive electrode active material includes a cobalt-free lithium nickel composite oxide represented by Chemical Formula 3.

Chemical Formula 1

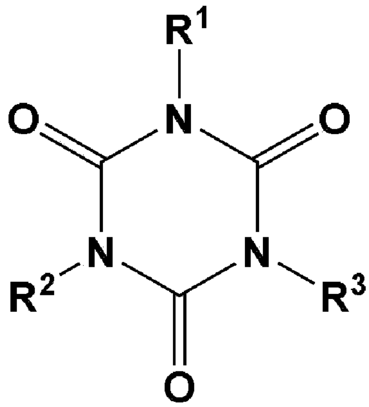

In Chemical Formula 1,

$R^1$ to $R^3$ are each independently hydrogen, a cyano group, a halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C2 to C20 heterocycloalkyl group, a substituted or unsubstituted C3 to C20 cycloalkenyl group, a substituted or unsubstituted C6 to C20 aryl group, or a substituted or unsubstituted C2 to C20 heteroaryl group;

Chemical Formula 2

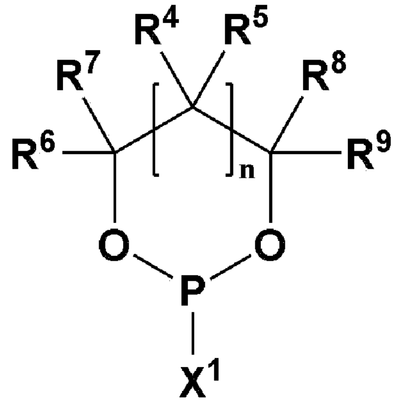

wherein, in Chemical Formula 2,
$X^1$ is a fluoro group (e.g., a fluorine atom), a chloro group (e.g., a chlorine atom), a bromo group (e.g., a bromine atom), or an iodo group (e.g., an iodine atom),
$R^4$ to $R^9$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1;

Chemical Formula 3 $Li_wNi_xMn_yM^1_{1-x-y}O_2$

wherein, in Chemical Formula 3,
$0.5 \le w \le 1.8$, $0.05 \le x < 1$, $0 < y \le 0.7$, and
$M^1$ is Al, Fe, B, Ce, Cr, F, Mg, Mn, Mo, Nb, P, S, Si, Sr, Ti, V, W, Zr, or a combination thereof.

A rechargeable lithium battery according to some embodiments can improve charge/discharge characteristics when stored at high temperatures and cycle-life characteristics at room temperature and high temperature, while reducing the amount of gas generated at high temperatures.

## BRIEF DESCRIPTION OF THE DRAWINGS

The accompanying drawings, together with the specification, illustrate embodiments of the subject matter of the present disclosure, and, together with the description, serve to explain principles of embodiments of the subject matter of the present disclosure.

FIG. 1 is a schematic perspective view of a rechargeable lithium battery according to an embodiment.
FIG. 2 is a schematic cross-sectional view of a rechargeable lithium battery according to an embodiment.
FIGS. 3-4 are schematic perspective views of rechargeable lithium batteries according to embodiments.

## DETAILED DESCRIPTION

Hereinafter, embodiments of the present disclosure will be described in more detail. However, these embodiments are presented as examples, and the present disclosure is not limited thereto, and the present disclosure is defined by the scope of the appended claims, and equivalents thereof.

As used herein, when specific definition is not otherwise provided, it will be understood that when an element such as a layer, film, region, or substrate is referred to as being "on" another element, it can be directly on the other element or

intervening elements may also be present.

As used herein, "combination thereof" means a mixture, laminate, composite, copolymer, alloy, blend, reaction product, and/or the like of the constituents.

As used herein, when a definition is not otherwise provided, a particle diameter may be an average particle diameter. In some embodiments, the particle diameter means the average particle diameter (D50), which means the diameter of particles having a cumulative volume of 50 volume% in the particle size distribution. The average particle size (D50) may be measured by any suitable method generally used in the art, for example, by a particle size analyzer, and/or by a transmission electron microscopic image, and/or a scanning electron microscopic image. In some embodiments, a dynamic light-scattering measurement device is used to perform a data analysis, and the number of particles is counted for each particle size range. From this, the average particle diameter (D50) value may be easily obtained through a calculation. In some embodiments, the average particle diameter can be measured using a laser diffraction method. When measuring by the laser diffraction method, for example, the particles to be measured may be dispersed in a dispersion medium, and then introduced into a commercially available laser diffraction particle diameter measuring device (e.g., Microtrac MT 3000), and ultrasonic waves of 28 kHz at an output of 60 W are irradiated to calculate an average particle diameter (D50) on the basis of 50% of the particle diameter distribution in the measuring device.

As used herein, when a definition is not otherwise provided, "substituted" refers to replacement of at least one hydrogen of a substituent or a compound by any one of deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, or a cyano group.

In some embodiments, "substituted" may refer to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. For example, "substituted" may refer to replacement of at least one hydrogen of a substituent or a compound by deuterium, a halogen, a C1 to C20 alkyl group, a C6 to C30 aryl group, a C1 to C10 fluoroalkyl group, or a cyano group. In some embodiments, "substitution" may refer to replacement of at least one hydrogen of a substituent or a compound by deuterium, a halogen group, a C1 to C5 alkyl group, a C6 to C18 aryl group, a C1 to C5 fluoroalkyl group, or a cyano group. For example, "substituted" may refer to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

A rechargeable lithium battery includes a positive electrode including a positive electrode active material; a negative electrode including a negative electrode active material; an electrolyte solution for a rechargeable lithium battery including a non-aqueous organic solvent, a lithium salt, and an additive, wherein the additive includes a first compound represented by Chemical Formula 1 and a second compound represented by Chemical Formula 2, and the positive electrode active material includes lithium nickel composite oxide represented by Chemical Formula 3.

Chemical Formula 1

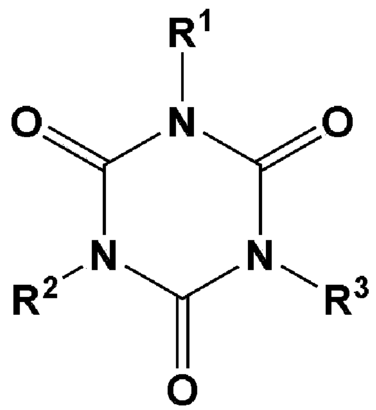

In Chemical Formula 1,

$R^1$ to $R^3$ are each independently hydrogen, a cyano group, a halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C2 to C20 heterocycloalkyl group, a substituted or unsubstituted C3 to C20 cycloalkenyl group, a substituted or unsubstituted C6 to C20 aryl

group, or a substituted or unsubstituted C2 to C20 heteroaryl group;

Chemical Formula 2

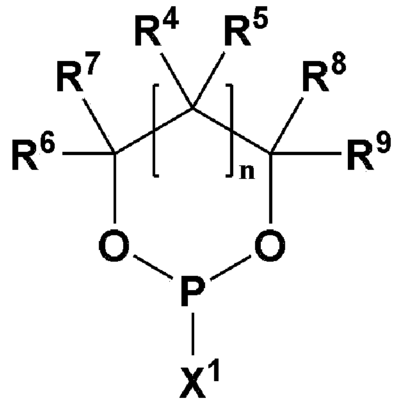

wherein, in Chemical Formula 2,
$X^1$ is a fluoro group (e.g., a fluorine atom), a chloro group (e.g., a chlorine atom), a bromo group (e.g., a bromine atom), or an iodo group (e.g., an iodine atom),
$R^4$ to $R^9$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1;

Chemical Formula 3 $Li_wNi_xMn_yM^1_{1-x-y}O_2$

wherein, in Chemical Formula 3,
$0.5 \leq w \leq 1.8$, $0.05 \leq x < 1$, $0 < y \leq 0.7$, and
$M^1$ is Al, Fe, B, Ce, Cr, F, Mg, Mn, Mo, Nb, P, S, Si, Sr, Ti, V, W, Zr, or a combination thereof.

The electrolyte solution includes a non-aqueous organic solvent, a lithium salt, and an additive.

The additive includes a first compound and a second compound.

The first compound is an isocyanurate-based compound, which may undergo a radical reaction with other compounds having double bonds in the electrolyte solution to form a solid and low-resistance CEI (Cathode Electrolyte Interphase) film on the positive electrode, and may improve the charge/discharge characteristics of the battery and cycle characteristics at room temperature and high temperature when stored at high temperatures.

The first compound is represented by Chemical Formula 1.

Chemical Formula 1

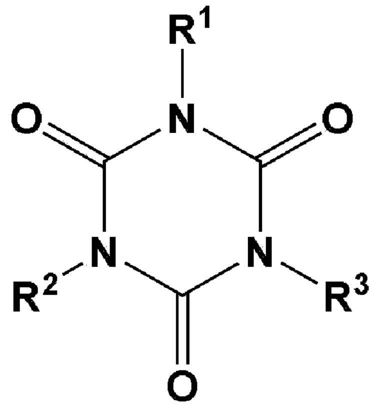

In Chemical Formula 1, $R^1$ to $R^3$ are each independently hydrogen, a cyano group, a halogen, a substituted or

unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C2 to C20 heterocycloalkyl group, a substituted or unsubstituted C3 to C20 cycloalkenyl group, a substituted or unsubstituted C6 to C20 aryl group, or a substituted or unsubstituted C2 to C20 heteroaryl group.

For example, $R^1$ to $R^3$ may each independently be a substituted or unsubstituted C1 to C20 alkyl group, or a substituted or unsubstituted C2 to C20 alkenyl group.

As an example, $R^1$ to $R^3$ may each independently be a substituted or unsubstituted C2 to C20 alkenyl group.

As an example, the compound represented by Chemical Formula 1 may be any one or more selected from the compounds listed in Group 1.

Group 1

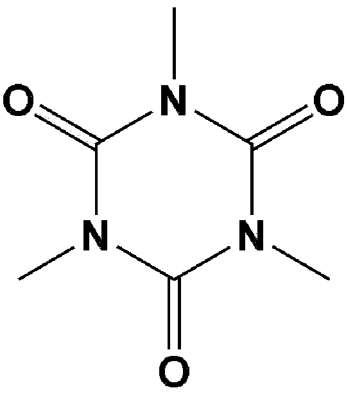

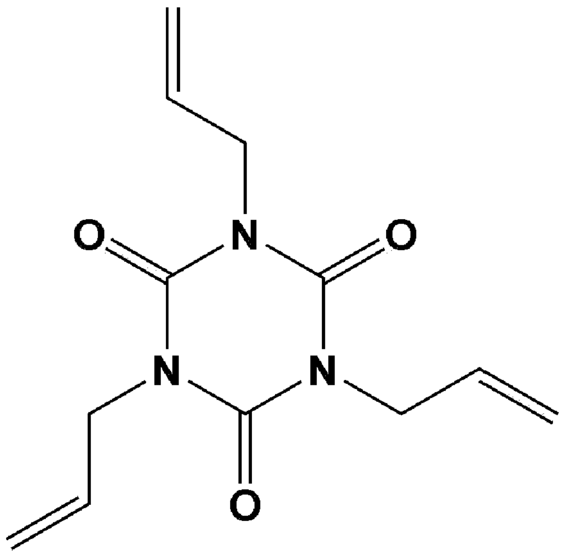

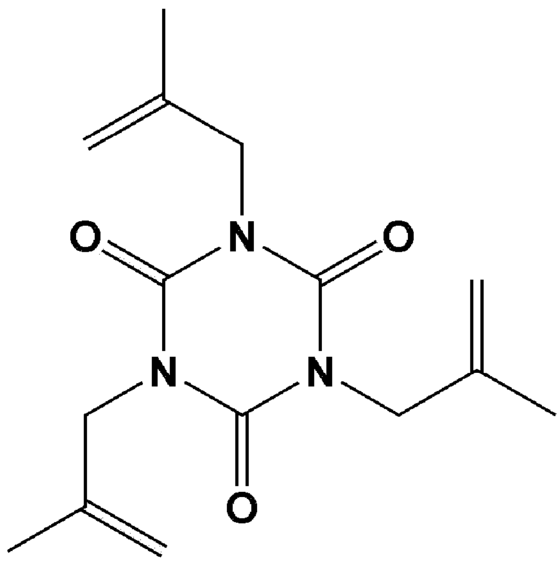

As an example, the first compound may be triallyl isocyanurate, trimethyl isocyanurate, trimethallyl isocyanurate, or a combination thereof, but is not limited to thereto.

The first compound may be included in an amount of 0.05 wt% to 3 wt%, for example 0.1 wt% to 2 wt%, or 0.5 wt% to 1 wt%, based on a total weight of the electrolyte solution. In the above ranges, a rechargeable lithium battery having improved high-temperature storage characteristics and cycle-life characteristics can be implemented.

The second compound forms a SEI (solid electrolyte interface) film having high temperature stability and excellent ionic conductivity on the surface of the negative electrode and suppresses or reduces side reactions of $LiPF_6$ due to the $-PO_2F$ functional group, thereby reducing gas generation due to the decomposition reaction of the electrolyte solution during high temperature storage.

In some embodiments, the second compound can form a composite by coordinating with the anion dissociated from the thermal decomposition product of lithium salt and/or lithium salt, such as $LiPF_6$, and the formation of these composites stabilizes the anion dissociated from the thermal decomposition product of lithium salt and/or lithium salt to suppress reduce occurrence unwanted side reactions between these composites and the electrolyte solution, improves cycle-life characteristics of the rechargeable lithium battery, and significantly reduces an occurrence of defects by preventing or reducing gas generation inside the rechargeable lithium battery.

The second compound may be represented by Chemical Formula 2.

Chemical Formula 2

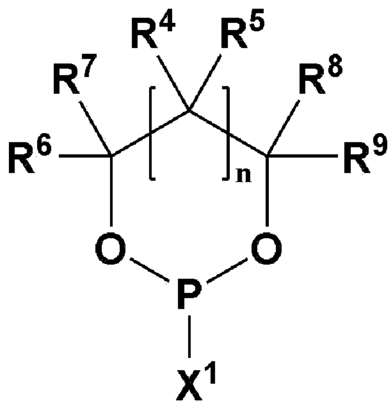

In Chemical Formula 2,

$X^1$ is a fluoro group (e.g., a fluorine atom), a chloro group (e.g., a chlorine atom), a bromo group (e.g., a bromine atom), or an iodo group (e.g., an iodine atom),
$R^4$ to $R^9$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group, and
n is an integer of 0 or 1.

Chemical Formula 2 may include a compound represented by Chemical Formula 2A or Chemical Formula 2B.

Chemical Formula 2A

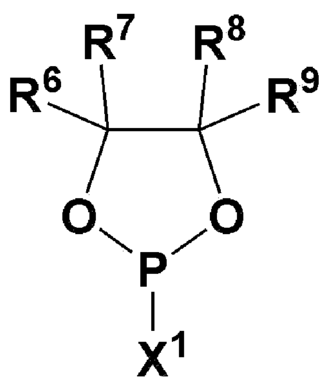

Chemical Formula 2B

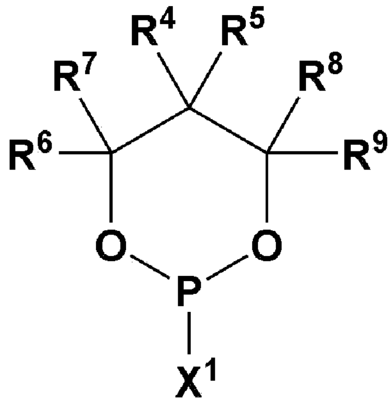

In Chemical Formulas 2A and 2B,

$X^1$ is a fluoro group (e.g., a fluorine atom), a chloro group (e.g., a chlorine atom), a bromo group (e.g., a bromine atom), or an iodo group (e.g., an iodine atom), and
$R^4$ to $R^9$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

In Chemical Formula 2A, $R^6$ and $R^7$ may each be hydrogen and at least one selected from $R^8$ and $R^9$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.
In Chemical Formula 2B, $R^6$ and $R^7$ may each be hydrogen and at least one selected from $R^4$, $R^5$, $R^8$, and $R^9$ may be a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.
For example, in Chemical Formula 2A, $R^6$ and $R^7$ may each be hydrogen and at least one selected from $R^8$ and $R^9$ may be a substituted or unsubstituted C1 to C10 alkyl group.
As an example, the compound represented by Chemical Formula 2 may be selected from the compounds listed in Group 2.

Group 2

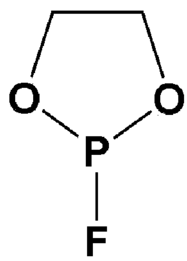

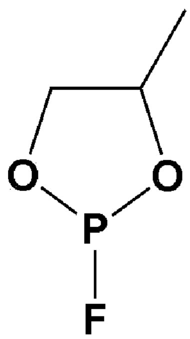

As an example, the compound represented by Chemical Formula 2 may include 2-fluoro-1,3,2-dioxaphospholane, 2-fluoro-4-methyl-1,3,2-dioxaphospholane, or a combination thereof.

The second compound may be included in an amount of 0.05 wt% to 3 wt%, for example 0.1 wt% to 2 wt%, or 0.5 wt% to 1 wt%, based on a total weight of the electrolyte solution. Within the above ranges, it is possible to implement a rechargeable lithium battery in which gas generation is reduced when stored at high temperature.

In some embodiments, the additive may further include other additives in addition to the compounds described above.

The other additives may include vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propenesultone (PST), propanesultone (PS), lithium tetrafluoroborate ($LiBF_4$), lithium difluorophosphate ($LiPO_2F_2$), 2-fluoro biphenyl (2-FBP), or a combination thereof.

By further including the other additives described above, cycle-life may be further improved and/or gases generated from the positive electrode and negative electrode can be effectively controlled when stored at high temperatures.

The non-aqueous organic solvent serves as a medium for transmitting ions taking part in the electrochemical reaction of a battery.

The non-aqueous organic solvent may be a carbonate-based, ester-based, ether-based, ketone-based, and/or alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethyl acetate, methyl propionate, ethyl propionate, decanolide, mevalonolactone, valerolactone, caprolactone, and/or the like

The ether-based solvent may include dibutyl ether, tetraglyme, diglyme, dimethoxyethane, 2-methyltetrahydrofuran, 2,5-dimethyltetrahydrofuran, tetrahydrofuran, and/or the like. In some embodiments, the ketone-based solvent may include cyclohexanone, and/or the like. The alcohol-based solvent may include ethanol, isopropyl alcohol, and/or the like and/or the aprotic solvent may include nitriles such as R-CN (wherein R is a C2 to C20 linear, branched, or cyclic hydrocarbon group, a double bond, an aromatic ring, and/or an ether bond, and/or the like; amides such as dimethylformamide; dioxolanes such as 1,3-dioxolane, 1,4-dioxolane, and/or the like; sulfolanes, and/or the like.

The non-aqueous organic solvents may be used alone or in combination of two or more.

In some embodiments, when using a carbonate-based solvent, a cyclic carbonate and a chain carbonate may be mixed together and used, and the cyclic carbonate and the chain carbonate may be mixed together in a volume ratio of 1:1 to 1:9.

The lithium salt dissolved in the organic solvent supplies lithium ions in a battery, enables a basic operation of a rechargeable lithium battery, and improves transportation of the lithium ions between positive and negative electrodes. Examples of the lithium salt include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (wherein x and y are integers of 1 to 20), lithium trifluoromethane sulfonate, lithium tetrafluoroethanesulfonate, lithium difluorobis(oxalato)phosphate (LiDFOB), and lithium bis(oxalato) borate (LiBOB).

### Positive Electrode Active Material

The positive electrode active material may include a compound (lithiated intercalation compound) being capable of intercalating and deintercalating lithium. In some embodiments, at least one of a composite oxide of lithium and a metal selected from manganese, nickel, and combinations thereof may be used.

The composite oxide is a lithium transition metal composite oxide, and includes a cobalt-free lithium nickel-manganese-based oxide, which is a lithium nickel composite oxide represented by Chemical Formula 3.

Chemical Formula 3 $$Li_wNi_xMn_yM^1_{1-x-y}O_2$$

In Chemical Formula 3,

$0.5 \leq w \leq 1.8$, $0.05 \leq x < 1$, $0 < y \leq 0.7$, and
$M^1$ is Al, Fe, B, Ce, Cr, F, Mg, Mn, Mo, Nb, P, S, Si, Sr, Ti, V, W, Zr, or a combination thereof.

The lithium nickel composite oxide represented by Chemical Formula 3 is a so-called cobalt-free positive electrode active material, and in Chemical Formula 3, $0.5 \leq w \leq 1.8$, $0.6 \leq w \leq 1.8$, $0.7 \leq w \leq 1.8$, $0.8 \leq w \leq 1.8$, $0.9 \leq w \leq 1.8$, $0.9 \leq w \leq 1.7$, $0.9 \leq w \leq 1.6$, $0.9 \leq w \leq 1.5$, $0.9 \leq w \leq 1.4$, $0.9 \leq w \leq 1.3$, $0.9 \leq w \leq 1.2$, or $0.9 \leq w \leq 1.1$; $0.05 \leq x < 1$, $0.3 \leq x < 1$, $0.4 \leq x < 1$,

$0.5 \le x < 1$, $0.6 \le x < 1$, $0.7 \le x < 1$, $0.8 \le x < 1$, or $0.9 \le x < 1$; $0 < y \le 0.7$, $0 < y \le 0.6$, $0 < y \le 0.5$, $0 < y \le 0.4$, $0 < y \le 0.3$, $0 < y \le 0.2$ or $0 < y \le 0.1$.

In the lithium nickel composite oxide represented by Chemical Formula 3, $M^1$ in Chemical Formula 3 may further include at least one selected from B, Ce, Cr, F, Mg, Mo, Nb, P, S, Si, Sr, Ti, V, W and Zr. The additional element is a dopant and can improve reversible intercalation and deintercalation of lithium by partially modifying the lattice structure of each positive electrode active material.

The lithium nickel composite oxide represented by Chemical Formula 3 has a problem in that decomposition of an electrolyte solution is promoted due to increased Ni activity under high voltage driving conditions, and the surface of the negative electrode is reduced after a large amount of Ni is eluted, thereby accelerating its cycle-life deterioration. However, when used together with an electrolyte solution including the first and second compounds described above, decomposition of the electrolyte solution can be suppressed or reduced, thereby reducing the amount of gas generated and improving the charge/discharge characteristics and cycle-life characteristics of the battery.

In some embodiments, the lithium nickel composite oxide represented by Chemical Formula 3 can achieve relatively stable performance at a driving voltage of 4.2 V or less, but when the driving voltage is 4.3 V or more, or, for example, 4.35 V or more, side reactions with the electrolyte solution become severe, and transition metal Ions are eluted, causing a rapid decline in battery performance, and the decline in battery performance may become more severe at high temperatures. However, when the lithium nickel composite oxide represented by Chemical Formula 3 is combined with an electrolyte solution including the first and second compounds described above, stable battery performance can be achieved under high voltage/high temperature conditions.

In some embodiments to the cobalt-free lithium nickel-manganese-based oxide, the positive electrode active material may further include lithium nickel-based oxide, lithium manganese-based oxide, a lithium iron phosphate-based compound, or a combination thereof.

As an example, the positive electrode active material may further include a compound represented by one selected from the following chemical formulas.

$Li_aA_{1-b}X_bO_{2-c}D_c$ ($0.90 \le a \le 1.8$, $0 \le b \le 0.5$, $0 \le c \le 0.05$); $Li_aMn_{2-b}X_bO_{4-c}D_c$ ($0.90 \le a \le 1.8$, $0 \le b \le 0.5$, $0 \le c \le 0.05$); $Li_aNi_{1-b-c}Mn_bX_cO_{2-\alpha}D_\alpha$ ($0.90 \le a \le 1.8$, $0 \le b \le 0.5$, $0 \le c \le 0.5$, $0 < \alpha < 2$); $Li_aNiG_bO_2$ ($0.90 \le a \le 1.8$, $0.001 \le b \le 0.1$); $Li_aMn_{1-b}G_bO_2$ ($0.90 \le a \le 1.8$, $0.001 \le b \le 0.1$); $Li_aMn_2G_bO_4$ ($0.90 \le a \le 1.8$, $0.001 \le b \le 0.1$); $Li_aMn_{1-g}G_gPO_4$ ($0.90 \le a \le 1.8$, $0 \le g \le 0.5$); $Li_{(3-f)}Fe_2(PO_4)_3$ ($0 \le f \le 2$); or $Li_aFePO_4$ ($0.90 \le a \le 1.8$).

In the above chemical formulas, A is Ni, Mn, or a combination thereof; X is Al, Ni, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and $L^1$ is Mn, Al, or a combination thereof.

For example, the positive electrode active material may be may be a high nickel-based positive electrode active material having a nickel content of greater than or equal to 80 mol%, greater than or equal to 85 mol%, greater than or equal to 90 mol%, greater than or equal to 91 mol%, or greater than or equal to 94 mol% and less than or equal to 99 mol% based on 100 mol% of the metal excluding lithium in the lithium transition metal composite oxide. The high-nickel-based positive electrode active material can realize high capacity and can be applied to a high-capacity, high-density rechargeable lithium battery.

## Positive Electrode

A positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode may further include an additive that can serve as a sacrificial positive electrode.

An amount of the positive electrode active material may be 90 wt% to 99.5 wt% based on 100% by weight of the positive electrode active material layer, and amounts of the binder and the conductive material may be 0.5 wt% to 5 wt%, respectively, based on 100 wt% of the positive electrode active material layer.

The binder serves to well attach the positive electrode active material particles to each other and also to well attach the positive electrode active material to the current collector. Examples of the binder may include polyvinyl alcohol, carboxymethylcellulose, hydroxypropylcellulose, diacetylcellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material is used to impart conductivity (e.g., electrical conductivity) to the electrode, and any suitable material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material containing copper, nickel, aluminum,

silver, etc., in a form of a metal powder and/or a metal fiber; a conductive polymer (e.g., an electrically conductive polymer) such as a polyphenylene derivative; or a mixture thereof.

Al may be used as the current collector, but is not limited thereto.

## Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, for example crystalline carbon, amorphous carbon or a combination thereof. The crystalline carbon may be graphite such as irregular, sheet-shaped, flake-shaped, sphere-shaped, and/or fiber-shaped natural graphite and/or artificial graphite, and the amorphous carbon may be a soft carbon, a hard carbon, a mesophase pitch carbonization product, calcined coke, and/or the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, $SiO_x$ ($0 < x < 2$), a Si-Q alloy (wherein Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, $SnO_2$, a Sn-based alloy, or a combination thereof.

The silicon-carbon composite may be a composite of silicon and amorphous carbon. According to some embodiments, the silicon-carbon composite may be in a form of silicon particles and amorphous carbon coated on a surface of the silicon particles. For example, it may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material and/or the Sn-based negative electrode active material may be used in combination with a carbon-based negative electrode active material.

## Negative Electrode

The negative electrode for a rechargeable lithium battery includes a current collector and a negative electrode active material layer on the current collector. The negative electrode active material layer may include a negative electrode active material, and may further include a binder and/or a conductive material (e.g., an electrically conductive material).

For example, the negative electrode active material layer may include 90 wt% to 99 wt% of the negative electrode active material, 0.5 wt% to 5 wt% of the binder, and 0 wt% to 5 wt% of the conductive material.

The binder serves to well attach the negative electrode active material particles to each other and also to well attach the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, poly amideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, a cellulose-based compound capable of imparting or increasing viscosity may be further included. The cellulose-based compound may include at least one of carboxymethyl cellulose, hydroxypropylmethyl cellulose, methyl cellulose, or an alkali metal salt thereof. The alkali metal may include Na, K, and/or Li.

The dry binder may be a polymer material capable of being fibrous (e.g., capable of being fibrillized or fiberized), and may be, for example, polytetrafluoroethylene, polyvinylidene fluoride, a polyvinylidene fluoride-hexafluoropropylene copolymer, polyethylene oxide, or a combination thereof.

The conductive material is used to impart conductivity (e.g., electrical conductivity) to the electrode, and any suitable material that does not cause chemical change (e.g., does not cause an undesirable chemical change) and conducts electrons can be used in the battery. Examples thereof may include a carbon-based material such as natural graphite, artificial graphite, carbon black, acetylene black, ketjen black, a carbon fiber, a carbon nanofiber, and a carbon nanotube; a metal-based material including copper, nickel, aluminum, silver, etc. in a form of a metal powder and/or a metal fiber; a conductive polymer (e.g., an electrically conductive polymer) such as a polyphenylene derivative; or a mixture thereof.

The negative current collector may include a copper foil, a nickel foil, a stainless steel foil, a titanium foil, a nickel foam, a copper foam, a polymer substrate coated with a conductive metal (e.g., an electrically conductive metal), and/or a combination thereof.

**Separator**

Depending on the type (or kind) of the rechargeable lithium battery, a separator may be present between the positive electrode and the negative electrode. The separator may include polyethylene, polypropylene, polyvinylidene fluoride, or a multilayer film of two or more layers thereof, and a mixed multilayer film such as a polyethylene/polypropylene two-layer separator, polyethylene/polypropylene/polyethylene three-layer separator, polypropylene/polyethylene/polypropylene three-layer separator, and/or the like.

The separator may include a porous substrate and a coating layer including an organic material, an inorganic material, or a combination thereof on one or both surfaces (e.g., two opposing surfaces) of the porous substrate.

The porous substrate may be a polymer film formed of any one polymer selected from polyolefin such as polyethylene and polypropylene, polyester such as polyethylene terephthalate and polybutylene terephthalate, polyacetal, polyamide, polyimide, polycarbonate, polyether ketone, polyarylether ketone, polyether ketone, polyetherimide, polyamideimide, polybenzimidazole, polyethersulfone, polyphenylene oxide, a cyclic olefin copolymer, polyphenylene sulfide, polyethylene naphthalate, a glass fiber, TEFLON, and polytetrafluoroethylene, or a copolymer or mixture of two or more thereof.

The organic material may include a polyvinylidene fluoride-based polymer and/or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed together in one coating layer, or a coating layer including an organic material and a coating layer including an inorganic material may be stacked.

**Rechargeable Lithium Battery**

The rechargeable lithium battery may be classified into cylindrical, prismatic, pouch, coin, and/or the like depending on their shape.

FIGS. 1-4 are schematic views illustrating a rechargeable lithium battery according to some embodiments. FIG. 1 shows a cylindrical battery, FIG. 2 shows a prismatic battery, and FIGS. 3-4 show pouch-type batteries.

Referring to FIGS. 1-4, the rechargeable lithium battery 100 includes an electrode assembly 40 including a separator 30 between a positive electrode 10 and a negative electrode 20, and a case in which the electrode assembly 40 is included. The positive electrode 10, the negative electrode 20, and the separator 30 may be impregnated with an electrolyte solution.

The rechargeable lithium battery 100 may include a sealing member 60 that seals the case 50 as shown in FIG. 1.

In FIG. 2, the rechargeable lithium battery 100 may include a positive lead tab 11, a positive terminal 12, a negative lead tab 21, and a negative terminal 22.

As shown in FIGS. 3-4, the rechargeable lithium battery 100 includes an electrode tab 70 (FIG. 4), for example, a positive electrode tab 71 and a negative electrode tab 72 (FIG. 3) that serve as an electrical path for inducing the current formed in the electrode assembly 40 to the outside.

As an example, a driving voltage of the rechargeable lithium battery may be 4.3 V or higher, or 4.35 V or higher. Even in a high voltage operating environment as described above, when the lithium nickel composite oxide represented by Chemical Formula 3 is used together with an electrolyte solution including the first and second compounds described above, stable battery performance can be achieved under high voltage/high temperature conditions.

The rechargeable lithium battery according to some embodiments may be applied to automobiles, mobile phones, and/or various suitable types (or kinds)of electrical devices, but the present disclosure is not limited thereto.

Examples and comparative examples of the present disclosure are described below. However, the following examples are only examples of the present disclosure, and the present disclosure is not limited to the following examples.

**Examples**

**Example 1**

A basic electrolyte solution is prepared by mixing together ethylene carbonate (EC), methylethyl carbonate (MEC), and dimethyl carbonate (DMC) sequentially in a volume ratio of 20:40:40 to prepare a non-aqueous organic solvent and dissolving 1.15 M of $LiPF_6$ lithium salt therein.

To the basic electrolyte solution, triallyl isocyanurate as a first compound and 2-fluoro-4-methyl-1,3,2-dioxaphospholane as a second compound are added to prepare an electrolyte solution.

Herein, 0.5 wt% of the first compound and 0.5 wt% of the second compound are added to a total amount of the electrolyte solution.

NMX ($LiNi_{0.75}Mn_{0.23}Al_{0.02}O_2$) as a positive electrode active material, polyvinylidene fluoride as a binder, and ketjen black as a conductive material are mixed together in a weight ratio of 97:2:1 and then, dispersed in N-methyl pyrrolidone, thereby preparing a positive electrode active material slurry. The positive electrode active material slurry is coated on a 14 μm-thick Al foil current collector, dried at 110 °C, and compressed, thereby manufacturing a positive electrode.

In addition, a negative electrode active material slurry is prepared by mixing together artificial graphite as a negative electrode active material, styrene-butadiene rubber as a binder, and carboxylmethyl cellulose as a thickener in a weight ratio of 97:1:2 and dispersing the mixture in distilled water. The negative electrode active material slurry is coated on a 10 μm-thick Cu foil current collector, dried at 100 °C, and compressed, manufacturing a negative electrode.

Between the positive electrode and the negative electrode, a 25 μm-thick separator having a polyethylene-polypropylene multi-layer structure is interposed to manufacture an electrode assembly, and a 4.45 V-class rechargeable lithium battery cell according to Example 1 is manufactured by inserting the electrode assembly into a cylindrical-type battery case and injecting the prepared electrolyte solution thereinto.

**Comparative Example 1**

A rechargeable lithium battery cell is manufactured in the same manner as in Example 1 except that the electrolyte solution is prepared by not adding the first compound and the second compound.

**Comparative Example 2**

A rechargeable lithium battery cell is manufactured in the same manner as in Example 1 except that the electrolyte solution is prepared by not adding the second compound.

**Comparative Example 3**

A rechargeable lithium battery cell is manufactured in the same manner as in Example 1 except that the electrolyte solution is prepared by not adding the first compound.

**Comparative Example 4**

A rechargeable lithium battery cell is manufactured in the same manner as in Example 1 except that the electrolyte solution is prepared by adding triallyl cyanurate represented by Chemical Formula a, instead of the triallyl isocyanurate as the first compound.

Chemical Formula a

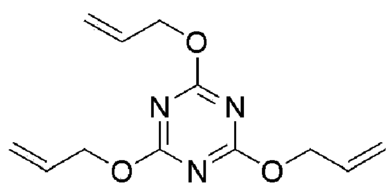

**Comparative Example 5**

A rechargeable lithium battery cell is manufactured in the same manner as in Example 1 except that the positive electrode is manufactured by using NCA ($LiNi_{0.5}Co_{0.2}Al_{0.3}O_2$) as the positive electrode active material.

**Evaluation Examples**

**Evaluation Example 1: Evaluation of high-temperature storage characteristics**

The rechargeable lithium battery cells of Example 1 and Comparative Examples 1 to 5 are measured with respect to △V/△I (voltage change/current change) to evaluate initial DC resistance (DCIR). Subsequently, after making an internal maximum energy state of each of the battery cells into a full-charge state (SOC 100%), the cell is allowed to stay at a high temperature of 60 °C for 30 days and then, measured again with respect to DC resistance (DCIR).

A DCIR increase rate (%) is calculated according to Equation 1, and the results are shown in Table 1.

Equation 1

$$\text{DCIR increase rate (\%)} = \{(\text{DCIR after 30 days - initial DCIR}) / (\text{initial DCIR})\}$$

Table 1

| | Initial DCIR (mΩ) | DCIR (mΩ) after high temperature (60 °C, 30 days) storage | DCIR increase rate (%) |
|---|---|---|---|
| Example 1 | 41.3 | 43.2 | 104.6 |
| Comparative Example 1 | 43.4 | 46.8 | 107.8 |
| Comparative Example 2 | 42.5 | 45.1 | 106.1 |
| Comparative Example 3 | 43.2 | 45.9 | 106.3 |
| Comparative Example 4 | 42.3 | 46.2 | 109.2 |
| Comparative Example 5 | 41.2 | 44.2 | 107.3 |

Referring to Table 1, Example 1, compared to Comparative Examples 1 to 5, exhibits a low DCIR increase rate at a high temperature, and thus, has excellent storage characteristics at a high temperature.

**Evaluation Example 2: Evaluation of room-temperature cycle-life characteristics**

The rechargeable lithium battery cells of Example 1 and Comparative Examples 1 to 5 are once charged and discharged at 0.2 C to measure charge and discharge capacity.

In addition, the rechargeable lithium battery cells of Example 1 and Comparative Examples 1 to 5 are charged to an upper limit charge voltage of 4.4 V and discharged to 2.5 V at 0.2 C under a constant current condition to measure initial discharge capacity.

The cells are 200 cycles charged at 0.33 C (CC/CV, 4.4 V, 0.025 C cut-off)/ discharged at 1.0 C (CC, 2.5 V cut-off) at 25 °C to measure discharge capacity.

A ratio of discharge capacity to the initial discharge capacity is shown as a capacity recovery rate (%, recovery) in Table 2.

**Evaluation Example 3: Evaluation of gas generation after high-temperature storage**

The rechargeable lithium battery cells of Example 1 and Comparative Examples 1 to 5 are allowed to stand at 60 °C for 7 days and then, measured with respect to each gas generation amount on the 1$^{st}$ day and the 7$^{th}$ day through refinery gas analysis (RGA), and the results are shown in Table 2.

A gas increase rate (%) is calculated according to Equation 2, and the results are shown in Table 2.

Equation 2

$$\text{Gas increase rate (\%)} = \{(\text{gas generation amount on the 7th day})/(\text{gas generation amount on the 1st day})\}$$

Table 2

| | Capacity recovery rate (25 °C, 200 cy, %) | Amount of gas generated after storage at high temperature (60 °C) | | |
|---|---|---|---|---|
| | | 1st day (mL) | 7th day (mL) | Gas increase rate (%) |
| Example 1 | 97.4 | 1.5 | 1.9 | 127 |
| Comparative Example 1 | 94.4 | 1.7 | 2.6 | 153 |
| Comparative Example 2 | 95.9 | 1.6 | 2.1 | 131 |
| Comparative Example 3 | 96.2 | 1.6 | 2.3 | 144 |
| Comparative Example 4 | 95.4 | 1.7 | 2.5 | 147 |
| Comparative Example 5 | 96.5 | 1.4 | 2.1 | 150 |

Referring to Table 2, Example 1 exhibits a high capacity recovery rate at room temperature, compared to Comparative Examples 1 to 5 and thus excellent room-temperature cycle-life characteristics.
In addition, referring to Table 2, Example 1 exhibits a significantly reduced gas increase rate after stored at a high temperature, compared to Comparative Examples 1 to 5.

**Description of Symbols**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

**Claims**

**1.** A rechargeable lithium battery (100), comprising:

a positive electrode (10) comprising a positive electrode active material;
a negative electrode (20) comprising a negative electrode active material;
an electrolyte solution comprising a non-aqueous organic solvent, a lithium salt, and an additive,
wherein the additive comprises a first compound represented by Chemical Formula 1 and a second compound represented by Chemical Formula 2, and
the positive electrode active material comprises a cobalt-free lithium nickel composite oxide represented by Chemical Formula 3:

Chemical Formula 1

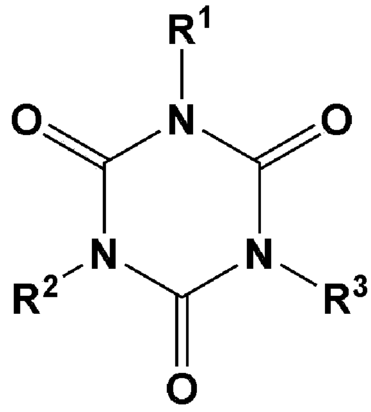

wherein, in Chemical Formula 1,

$R^1$ to $R^3$ are each independently hydrogen, a cyano group, a halogen, a substituted or unsubstituted C1 to C20 alkyl group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C2 to C20 heterocycloalkyl group, a substituted or unsubstituted C3 to C20 cycloalkenyl group, a substituted or unsubstituted C6 to C20 aryl group, or a substituted or unsubstituted C2 to C20 heteroaryl group,

wherein the term "substituted" refers to replacement of at least one hydrogen by any one of deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, or a cyano group;

Chemical Formula 2

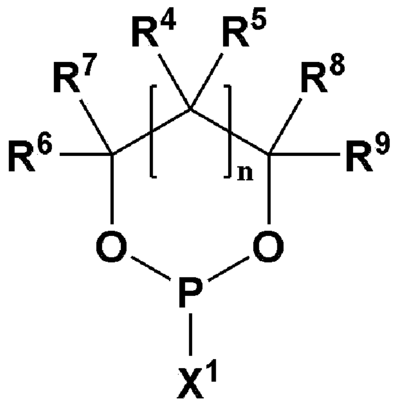

wherein, in Chemical Formula 2,

$X^1$ is a fluoro group, a chloro group, a bromo group, or an iodo group, and

$R^4$ to $R^9$ are each independently hydrogen, a cyano group, a substituted or unsubstituted C1 to C20 alkyl group, a substituted or unsubstituted C1 to C20 alkoxy group, a substituted or unsubstituted C2 to C20 alkenyl group, a substituted or unsubstituted C2 to C20 alkynyl group, a substituted or unsubstituted C3 to C20 cycloalkyl group, a substituted or unsubstituted C6 to C20 aryl group, or a substituted or unsubstituted C2 to C20 heteroaryl group,

wherein the term "substituted" refers to replacement of at least one hydrogen by any one of deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, or a cyano group; and

n is an integer of 0 or 1;

Chemical Formula 3 $Li_wNi_xMn_yM^1_{1-x-y}O_2$

wherein, in Chemical Formula 3,
$0.5 \leq w \leq 1.8$, $0.05 \leq x < 1$, $0 < y \leq 0.7$, and
$M^1$ is Al, Fe, B, Ce, Cr, F, Mg, Mn, Mo, Nb, P, S, Si, Sr, Ti, V, W, Zr, or a combination thereof.

**2.** The rechargeable lithium battery (100) as claimed in claim 1, wherein: in Chemical Formula 1, $R^1$ to $R^3$ are each independently a substituted or unsubstituted C1 to C20 alkyl group, or a substituted or unsubstituted C2 to C20 alkenyl group.

**3.** The rechargeable lithium battery (100) as claimed in claim 2, wherein: the compound represented by Chemical Formula 1 is any one or more selected from the compounds listed in Group 1:

Group 1

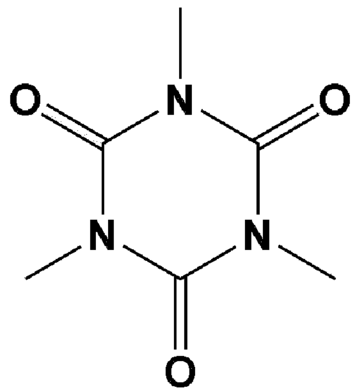

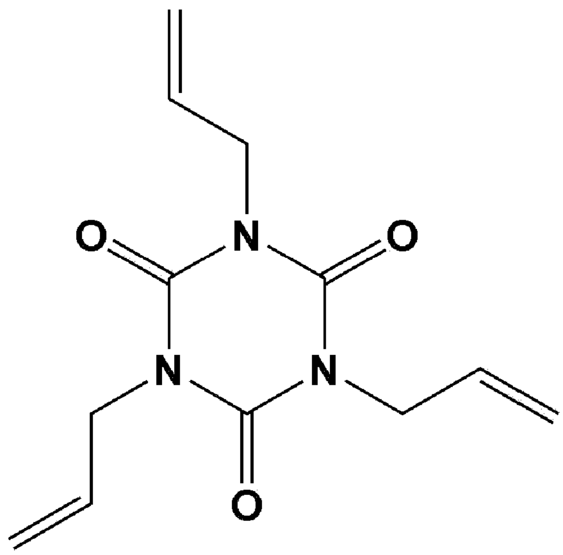

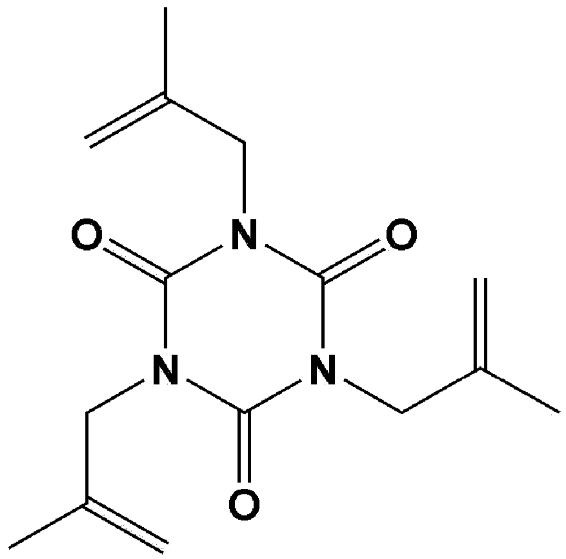

4. The rechargeable lithium battery (100) as claimed in any one of the preceding claims, wherein:
The compound represented by Chemical Formula 2 comprises a compound represented by Chemical Formula 2A or Chemical Formula 2B:

Chemical Formula 2A

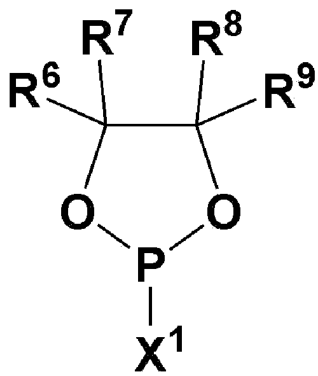

Chemical Formula 2B

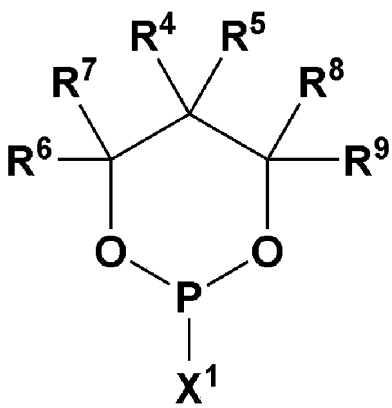

wherein, in Chemical Formulas 2A and 2B,
$X^1$ is a fluoro group, a chloro group, a bromo group, or an iodo group,
$R^4$ and $R^5$ are the same as in Chemical Formula 2, and

$R^6$ to $R^9$ are each independently hydrogen, a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

**5.** The rechargeable lithium battery (100) as claimed in claim 4, wherein:
in Chemical Formula 2A, $R^6$ and $R^7$ are each hydrogen and at least one selected from $R^8$ and $R^9$ is a substituted or unsubstituted C1 to C10 alkyl group, a substituted or unsubstituted C1 to C10 alkoxy group, a substituted or unsubstituted C2 to C10 alkenyl group, or a substituted or unsubstituted C2 to C10 alkynyl group.

**6.** The rechargeable lithium battery (100) as claimed in claim 4, wherein:
the compound represented by Chemical Formula 2 is selected from the compounds listed in Group 2:

Group 2

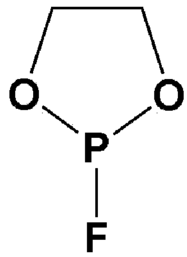

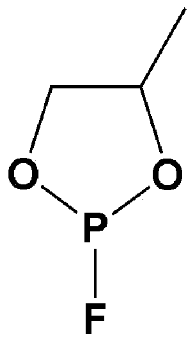

.

**7.** The rechargeable lithium battery (100) as claimed in any one of the preceding claims, wherein:
the first compound is included in an amount of 0.05 wt% to 3 wt% based on a total weight of the electrolyte solution.

**8.** The rechargeable lithium battery (100) as claimed in any one of the preceding claims, wherein:
the second compound is included in an amount of 0.05 wt% to 3 wt% based on a total weight of the electrolyte solution.

**9.** The rechargeable lithium battery (100) as claimed in any one of the preceding claims, wherein:
the additive further comprises another additive comprising vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propenesultone (PST), propanesultone (PS), lithium tetrafluoroborate ($LiBF_4$), lithium difluorophosphate ($LiPO_2F_2$), 2-fluoro biphenyl (2-FBP), or a combination thereof.

**10.** The rechargeable lithium battery (100) as claimed in any one of the preceding claims, wherein:
in Chemical Formula 3, $0.9 \leq w \leq 1.1$, $0.6 \leq x < 1$, and $0 < y \leq 0.4$.

**11.** The rechargeable lithium battery (100) as claimed in any one of the preceding claims, wherein:
a driving voltage of the rechargeable lithium battery is 4.3 V or higher.

## Patentansprüche

1. Wiederaufladbare Lithiumbatterie (100), umfassend:

eine positive Elektrode (10), die ein Aktivmaterial für die positive Elektrode umfasst;
eine negative Elektrode (20), die ein Aktivmaterial für die negative Elektrode umfasst;
eine Elektrolytlösung, die ein nicht wässriges organisches Lösungsmittel, ein Lithiumsalz und einen Zusatzstoff umfasst,
wobei der Zusatzstoff eine durch die chemische Formel 1 dargestellte erste Verbindung und eine durch die chemische Formel 2 dargestellte zweite Verbindung umfasst, und
das Aktivmaterial für die positive Elektrode ein kobaltfreies Oxid eine Lithium-Nickel-Verbunds umfasst, das durch die chemische Formel 3 dargestellt ist:

Chemische Formel 1

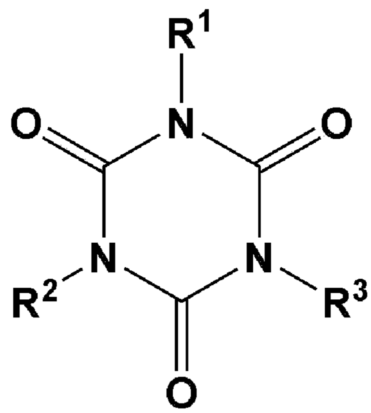

wobei in der chemischen Formel 1
$R^1$ bis $R^3$ jeweils unabhängig für Wasserstoff, eine Cyanogruppe, ein Halogen, eine substituierte oder unsubstituierte C1- bis C20-Alkylgruppe, eine substituierte oder unsubstituierte C2- bis C20-Alkenylgruppe, eine substituierte oder unsubstituierte C2- bis C20-Alkinylgruppe, eine substituierte oder unsubstituierte C3- bis C20-Cycloalkylgruppe, eine substituierte oder unsubstituierte C2- bis C20-Heterocycloalkylgruppe, eine substituierte oder unsubstituierte C3- bis C20-Cycloalkenylgruppe, eine substituierte oder unsubstituierte C6- bis C20-Arylgruppe oder eine substituierte oder unsubstituierte C2- bis C20-Heteroarylgruppe stehen, wobei sich der Begriff "substituiert" auf den Ersatz mindestens eines Wasserstoffs durch ein beliebiges von Deuterium, einem Halogen, einer Hydroxylgruppe, einer Aminogruppe, einer C1- bis C30-Amingruppe, einer Nitrogruppe, einer C1- bis C40-Silylgruppe, einer C1- bis C30-Alkylgruppe, einer C1- bis C10-Alkylsilylgruppe, einer C6- bis C30-Arylsilylgruppe, einer C3- bis C30-Cycloalkylgruppe, einer C3- bis C30-Heterocycloalkylgruppe, einer C6- bis C30-Arylgruppe, einer C2- bis C30-Heteroarylgruppe, einer C1- bis C20-Alkoxygruppe, einer C1- bis C10-Fluoralkylgruppe oder einer Cyanogruppe bezieht;

Chemische Formel 2

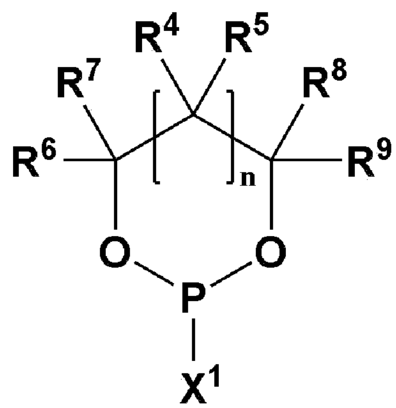

wobei in der chemischen Formel 2
$X^1$ für eine Fluorgruppe, eine Chlorgruppe, eine Bromgruppe oder eine Iodgruppe steht, und
$R^4$ bis $R^9$ jeweils unabhängig für Wasserstoff, eine Cyanogruppe, eine substituierte oder unsubstituierte C1- bis C20-Alkylgruppe, eine substituierte oder unsubstituierte C1- bis C20-Alkoxygruppe, eine substituierte oder unsubstituierte C2- bis C20-Alkenylgruppe, eine substituierte oder unsubstituierte C2- bis C20-Alkinylgruppe, eine substituierte oder unsubstituierte C3- bis C20-Cykloalkylgruppe, eine substituierte oder unsubstituierte C6-C20-Arylgruppe oder eine substituierte oder unsubstituierte C2- bis C20-Heteroarylgruppe stehen,
wobei sich der Begriff "substituiert" auf den Ersatz mindestens eines Wasserstoffs durch ein beliebiges von Deuterium, einem Halogen, einer Hydroxylgruppe, einer Aminogruppe, einer C1- bis C30-Amingruppe, einer Nitrogruppe, einer C1- bis C40-Silylgruppe, einer C1- bis C30-Alkylgruppe, einer C1- bis C10-Alkylsilylgruppe, einer C6- bis C30-Arylsilylgruppe, einer C3- bis C30-Cycloalkylgruppe, einer C3- bis C30-Heterocycloalkylgruppe, einer C6- bis C30-Arylgruppe, einer C2- bis C30-Heteroarylgruppe, einer C1- bis C20-Alkoxygruppe, einer C1- bis C10-Fluoralkylgruppe oder einer Cyanogruppe bezieht; und
n für eine ganze Zahl von 0 oder 1 steht;

Chemische Formel 3 $Li_wNi_xMn_yM^1_{1-x-y}O_2$

wobei in der chemischen Formel 3
$0{,}5 \leq w \leq 1{,}8$, $0{,}05 \leq x < 1$, $0 < y \leq 0{,}7$, und
$M^1$ für Al, Fe, B, Ce, Cr, F, Mg, Mn, Mo, Nb, P, S, Si, Sr, Ti, V, W, Zr oder eine Kombination davon steht.

**2.** Wiederaufladbare Lithiumbatterie (100) nach Anspruch 1, wobei:
in der chemischen Formel 1 $R^1$ bis $R^3$ jeweils unabhängig für eine substituierte oder unsubstituierte C1- bis C20-Alkylgruppe eine substituierte oder unsubstituierte C2-bis C20-Alkenylgruppe stehen.

**3.** Wiederaufladbare Lithiumbatterie (100) nach Anspruch 2, wobei:
es sich bei der Verbindung, die durch die chemische Formel 1 dargestellt ist, um eine beliebige oder mehrere handelt, die aus den in Gruppe 1 aufgeführten Verbindungen ausgewählt sind:

Gruppe 1

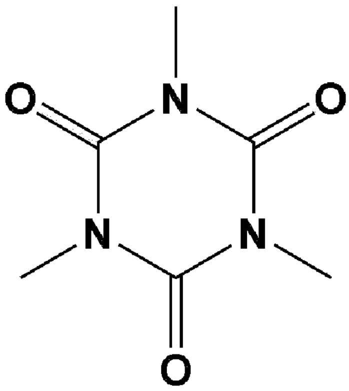

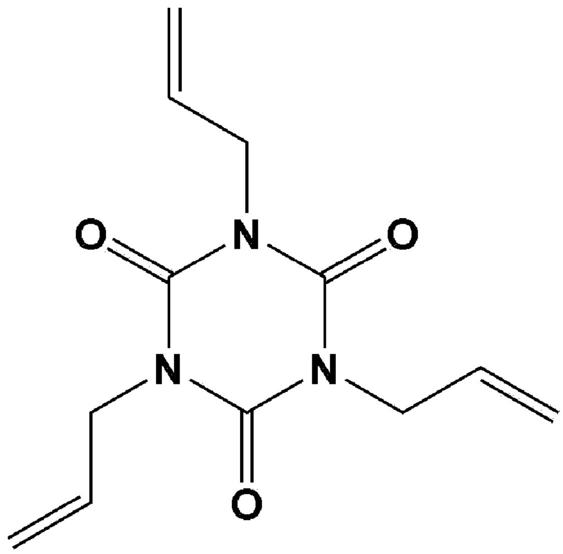

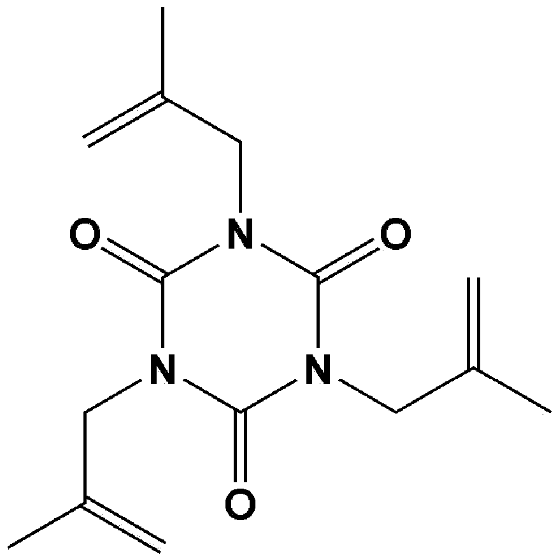

**4.** Wiederaufladbare Lithiumbatterie (100) nach einem der vorhergehenden Ansprüche, wobei:

die Verbindung, die durch die chemische Formel 2 dargestellt ist, eine Verbindung umfasst, die durch die chemische Formel 2A oder die chemische Formel 2B dargestellt ist:

Chemische Formel 2A

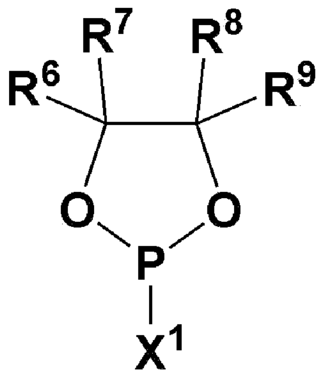

Chemische Formel 2B

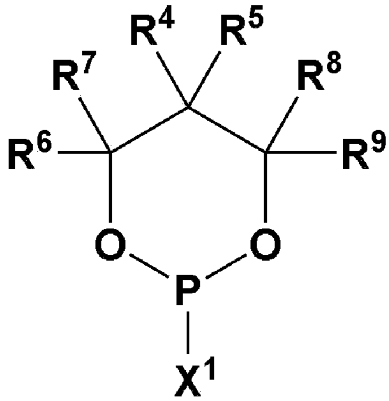

wobei in den chemischen Formeln 2A und 2B
$X^1$ für eine Fluorgruppe, eine Chlorgruppe, eine Bromgruppe oder eine Iodgruppe steht,
$R^4$ und $R^5$ dieselben wie in der chemischen Formel 2 sind, und
$R^6$ bis $R^9$ jeweils unabhängig für Wasserstoff, eine substituierte oder unsubstituierte C1- bis C10-Alkylgruppe, eine substituierte oder unsubstituierte C1- bis C10-Alkoxygruppe, eine substituierte oder unsubstituierte C2- bis C10-Alkenylgruppe oder eine substituierte oder unsubstituierte C2- bis C10-Alkinylgruppe stehen.

**5.** Wiederaufladbare Lithiumbatterie (100) nach Anspruch 4, wobei:
in der chemischen Formel 2A $R^6$ und $R^7$ jeweils für Wasserstoff stehen und mindestens eines, das ausgewählt ist aus $R^8$ und $R^9$, für eine substituierte oder unsubstituierte C1- bis C10-Alkylgruppe, eine substituierte oder unsubstituierte C1-bis C10-Alkoxygruppe, eine substituierte oder unsubstituierte C2- bis C10-Alkenylgruppe oder eine substituierte oder unsubstituierte C2- bis C10-Alkinylgruppe steht.

**6.** Wiederaufladbare Lithiumbatterie (100) nach Anspruch 4, wobei:
die durch die chemische Formel 2 dargestellte Verbindung aus den in Gruppe 2 aufgeführten Verbindungen ausgewählt ist:

Gruppe 2

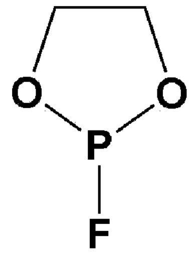

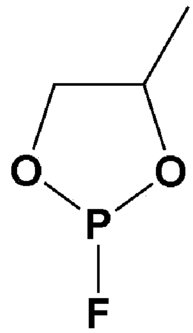

**7.** Wiederaufladbare Lithiumbatterie (100) nach einem der vorhergehenden Ansprüche, wobei:
die erste Verbindung in einer Menge von 0,05 Gew.-% bis 3 Gew.-% basierend auf dem Gesamtgewicht der Elektrolytlösung enthalten ist.

**8.** Wiederaufladbare Lithiumbatterie (100) nach einem der vorhergehenden Ansprüche, wobei:
die zweite Verbindung in einer Menge von 0,05 Gew.-% bis 3 Gew.-% basierend auf dem Gesamtgewicht der Elektrolytlösung enthalten ist.

**9.** Wiederaufladbare Lithiumbatterie (100) nach einem der vorhergehenden Ansprüche, wobei:
der Zusatzstoff ferner einen anderen Zusatzstoff umfasst, der Vinylencarbonat (VC), Fluorethylencarbonat (FEC), Difluorethylencarbonat, Chlorethylencarbonat, Dichlorethylencarbonat, Bromethylencarbonat, Dibromethylencarbonat, Nitroethylencarbonat, Cyanoethylencarbonat, Vinylethylencarbonat (VEC), Adiponitril (AN), Succinonitril (SN), 1,3,6-Hexantricyanid (HTCN), Propensulton (PST), Propansulton (PS), Lithiumtetrafluorborat ($LiBF_4$), Lithiumdifluorphosphat ($LiPO_2F_2$), 2-Fluorbiphenyl (2-FBP) oder eine Kombination davon umfasst.

**10.** Wiederaufladbare Lithiumbatterie (100) nach einem der vorhergehenden Ansprüche, wobei:
in der chemischen Formel 3 $0{,}9 \leq w \leq 1{,}1$, $0{,}6 \leq x < 1$ und $0 < y \leq 0{,}4$ gelten.

**11.** Wiederaufladbare Lithiumbatterie (100) nach einem der vorhergehenden Ansprüche, wobei:
eine Antriebsspannung der wiederaufladbaren Lithiumbatterie 4,3 V oder mehr beträgt.

**Revendications**

**1.** Batterie rechargeable au lithium (100) comportant :

une électrode positive (10) comportant un matériau actif d'électrode positive ;
une électrode négative (20) comportant un matériau actif d'électrode négative ;
une solution électrolytique comportant un solvant organique non aqueux, un sel de lithium et un additif,
dans laquelle l'additif comporte un premier composé représenté par la Formule chimique 1 et un second composé représenté par la Formule chimique 2, et
le matériau actif d'électrode positive comporte un oxyde composite de lithium-nickel exempt de cobalt représenté par la Formule chimique 3 :

Formule chimique 1

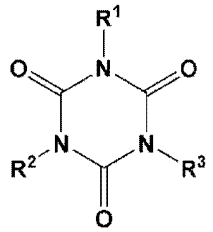

dans laquelle, dans la Formule chimique 1,
$R^1$ à $R^3$ sont chacun indépendamment hydrogène, un groupe cyano, halogène, groupe alkyle en C1 à C20 substitué ou non substitué, groupe alcényle en C2 à C20 substitué ou non substitué, groupe alcynyle en C2 à C20 substitué ou non substitué, groupe cycloalkyle en C3 à C20 substitué ou non substitué, groupe hétérocycloalkyle en C2 à C20 substitué ou non substitué, groupe cycloalcényle en C3 à C20 substitué ou non substitué, groupe aryle en C6 à C20 substitué ou non substitué, ou groupe hétéroaryle en C2 à C20 substitué ou non substitué, dans laquelle le terme « substitué » désigne le remplacement d'au moins un hydrogène par l'un quelconque parmi le deutérium, un halogène, groupe hydroxyle, groupe amino, groupe amine en C1 à C30, groupe nitro, groupe silyle en C1 à C40, groupe alkyle en C1 à C30, groupe alkylsilyle en C1 à C10, groupe arylsilyle en C6 à C30, groupe cycloalkyle en C3 à C30, groupe hétérocycloalkyle en C3 à C30, groupe aryle en C6 à C30, groupe hétéroaryle en C2 à C30, groupe alcoxy en C1 à C20, groupe fluoroalkyle en C1 à C10, ou groupe cyano ;

Formule chimique 2

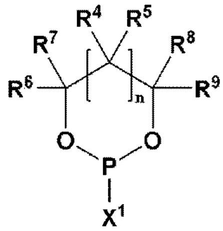

dans laquelle, dans la Formule chimique 2,
$X^1$ est un groupe fluoro, groupe chloro, groupe bromo ou groupe iodo, et $R^4$ à $R^9$ sont chacun indépendamment hydrogène, un groupe cyano, groupe alkyle en C1 à C20 substitué ou non substitué, groupe alcoxy en C1 à C20 substitué ou non substitué, groupe alcényle en C2 à C20 substitué ou non substitué, groupe alcynyle en C2 à C20 substitué ou non substitué, groupe cycloalkyle en C3 à C20 substitué ou non substitué, groupe aryle en C6 à C20 substitué ou non substitué, ou groupe hétéroaryle en C2 à C20 substitué ou non substitué,
dans laquelle le terme « substitué » désigne le remplacement d'au moins un hydrogène par l'un quelconque parmi le deutérium, un halogène, groupe hydroxyle, groupe amino, groupe amine en C1 à C30, groupe nitro, groupe silyle en C1 à C40, groupe alkyle en C1 à C30, groupe alkylsilyle en C1 à C10, groupe arylsilyle en C6 à C30, groupe cycloalkyle en C3 à C30, groupe hétérocycloalkyle en C3 à C30, groupe aryle en C6 à C30, groupe hétéroaryle en C2 à C30, groupe alcoxy en C1 à C20, groupe fluoroalkyle en C1 à C10, ou groupe cyano ; et n est un nombre entier égal à 0 ou 1 ;

Formule chimique 3 $Li_wNi_xMn_yM^1_{1-x-y}O_2$

dans laquelle, dans la Formule chimique 3,
$0{,}5 \leq w \leq 1{,}8$, $0{,}05 \leq x < 1$, $0 < y \leq 0{,}7$, et
$M^1$ est Al, Fe, B, Ce, Cr, F, Mg, Mn, Mo, Nb, P, S, Si, Sr, Ti, V, W, Zr, ou une combinaison de ceux-ci.

**2.** Batterie rechargeable au lithium (100) selon la revendication 1, dans laquelle :
dans la Formule chimique 1, $R^1$ à $R^3$ sont chacun indépendamment un groupe alkyle en C1 à C20 substitué ou non substitué, ou un groupe alcényle en C2 à C20 substitué ou non substitué.

**3.** Batterie rechargeable au lithium (100) selon la revendication 2, dans laquelle :
le composé représenté par la Formule chimique 1 est un ou plusieurs composés choisis parmi les composés énumérés dans le Groupe 1

Groupe 1

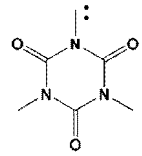

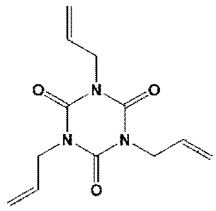

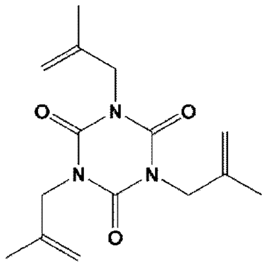

**4.** Batterie rechargeable au lithium (100) selon l'une quelconque des revendications précédentes, dans laquelle :

le composé représenté par la Formule chimique 2 comporte un composé représenté par la Formule chimique 2A ou la Formule chimique 2B :

Formule chimique 2A

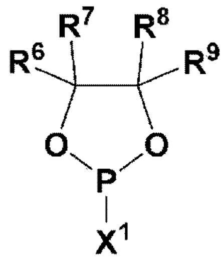

Formule chimique 2B

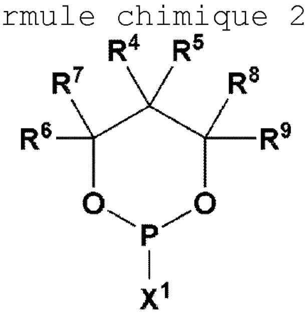

dans laquelle, dans les Formules chimiques 2A et 2B,
$X^1$ est un groupe fluoro, groupe chloro, groupe bromo, ou groupe iodo,
$R^4$ et $R^5$ sont les mêmes que dans la Formule chimique 2, et
$R^6$ à $R^9$ sont chacun indépendamment hydrogène, un groupe alkyle en C1 à C10 substitué ou non substitué, groupe alcoxy en C1 à C10 substitué ou non substitué, groupe alcényle en C2 à C10 substitué ou non substitué,

ou groupe alcynyle en C2 à C10 substitué ou non substitué.

5. Batterie rechargeable au lithium (100) selon la revendication 4, dans laquelle :
dans la Formule chimique 2A, $R^6$ et $R^7$ sont chacun hydrogène et au moins un choisi parmi $R^8$ et $R^9$ est un groupe alkyle en C1 à C10 substitué ou non substitué, groupe alcoxy en C1 à C10 substitué ou non substitué, groupe alcényle en C2 à C10 substitué ou non substitué, ou groupe alcynyle en C2 à C10 substitué ou non substitué.

6. Batterie rechargeable au lithium (100) selon la revendication 4, dans laquelle :
le composé représenté par la Formule chimique 2 est choisi parmi les composés énumérés dans le Groupe 2 :

Groupe 2 :

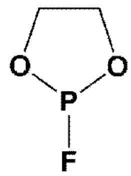

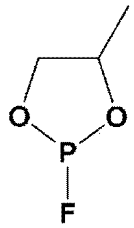

7. Batterie rechargeable au lithium (100) selon l'une quelconque des revendications précédentes, dans laquelle :
le premier composé est inclus en une quantité de 0,05 % en poids à 3 % en poids sur la base d'un poids total de la solution électrolytique.

8. Batterie rechargeable au lithium (100) selon l'une quelconque des revendications précédentes, dans laquelle :
le second composé est inclus en une quantité de 0,05 % en poids à 3 % en poids sur la base d'un poids total de la solution électrolytique.

9. Batterie rechargeable au lithium (100) selon l'une quelconque des revendications précédentes, dans laquelle :
l'additif comporte en outre un autre additif comportant du carbonate de vinylène (VC), carbonate de fluoroéthylène (FEC), carbonate de difluoroéthylène, carbonate de chloroéthylène, carbonate de dichloroéthylène, carbonate de bromoéthylène, carbonate de dibromoéthylène, carbonate de nitroéthylène, carbonate de cyanoéthylène, carbonate de vinyléthylène (VEC), adiponitrile (AN), succinonitrile (SN), 1,3,6-hexane tricyanure (HTCN), propènesultone (PST), propanesultone (PS), tétrafluoroborate de lithium ($LiBF_4$), difluorophosphate de lithium ($LiPO_2F_2$), 2-fluorobiphényle (2-FBP), ou une combinaison de ceux-ci.

10. Batterie rechargeable au lithium (100) selon l'une quelconque des revendications précédentes, dans laquelle :
dans la Formule chimique 3, $0,9 \le w \le 1,1$, $0,6 \le x < 1$, et $0 < y \le 0,4$.

11. Batterie rechargeable au lithium (100) selon l'une quelconque des revendications précédentes, dans laquelle :
la tension d'entraînement de la batterie rechargeable au lithium est de 4,3 V minimum.

FIG. 1

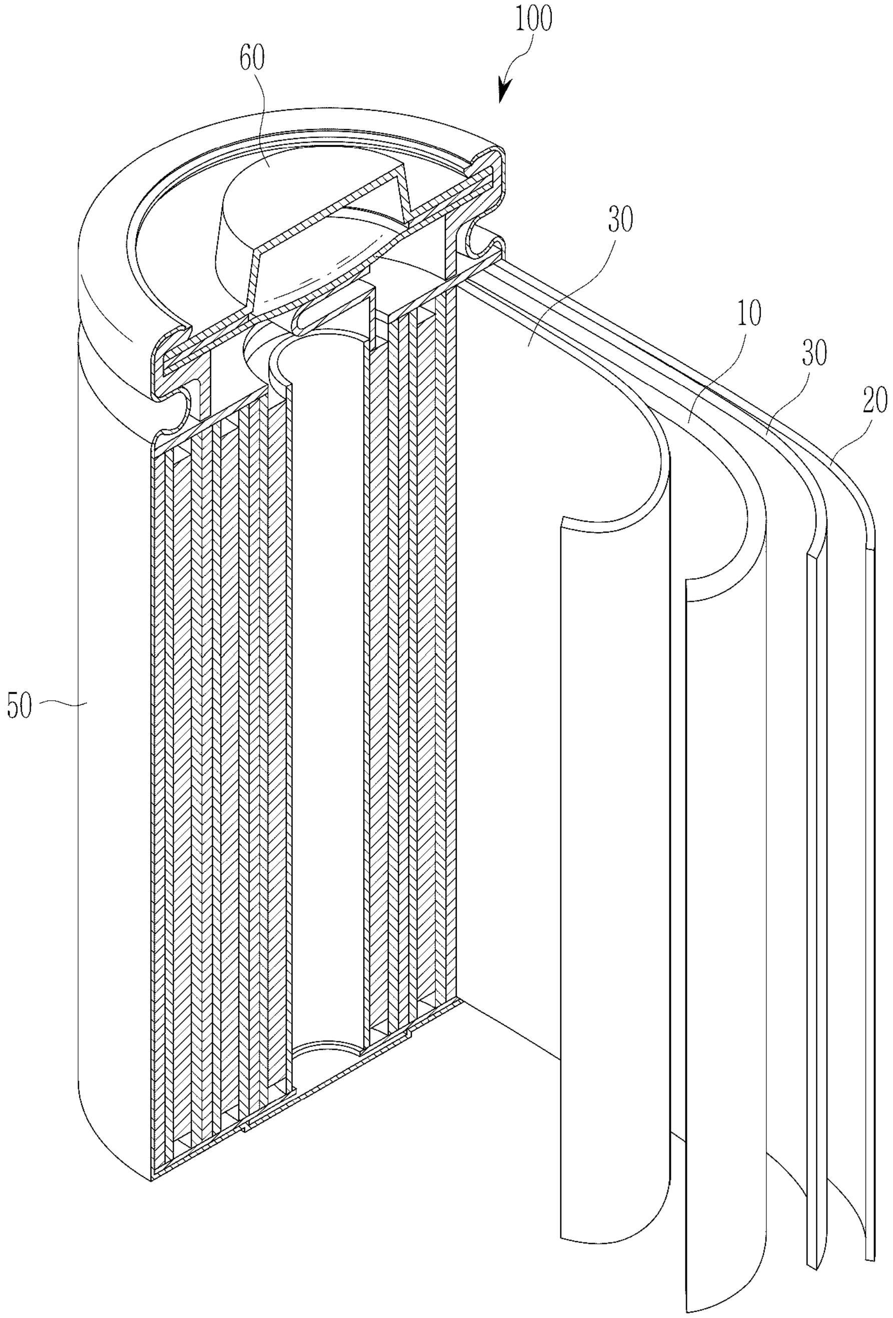

FIG. 2

100

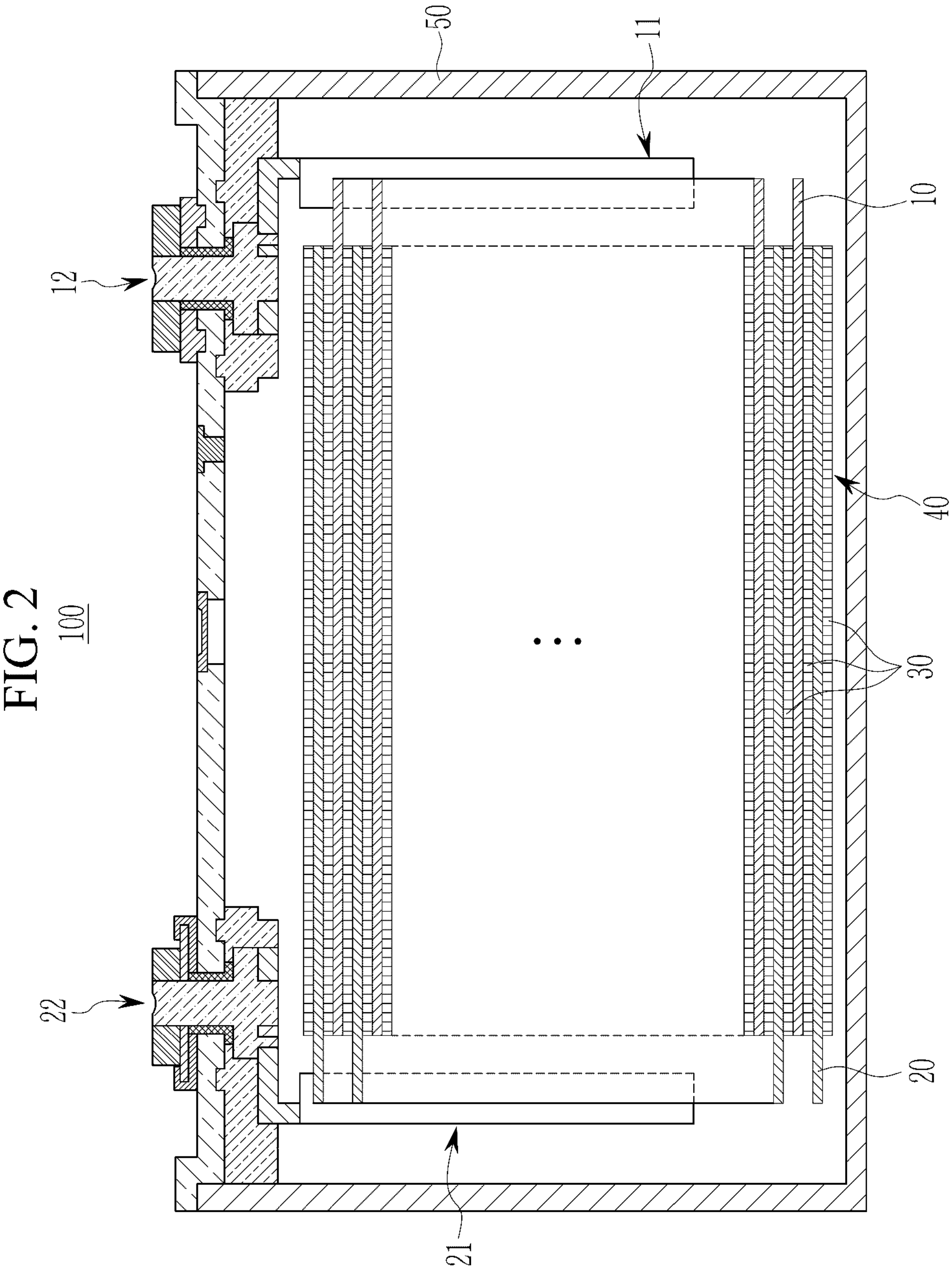

FIG. 3

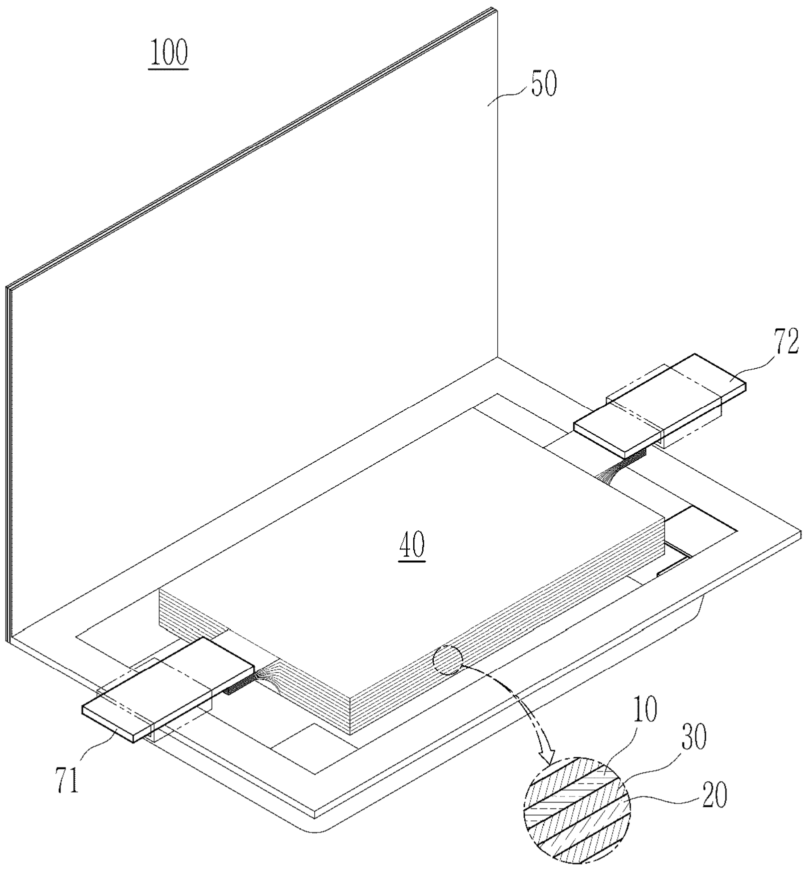

FIG. 4

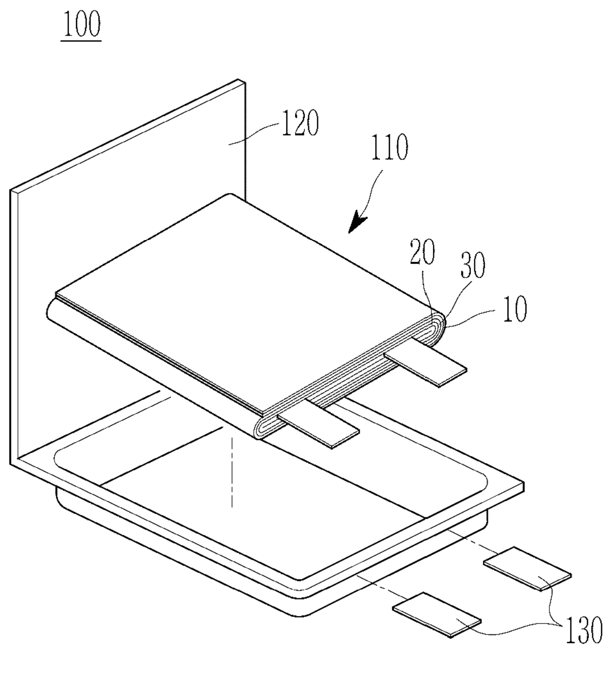

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 44142005 A1
- US 20230187693 A1